# EUROPEAN PATENT APPLICATION

(11) **EP 4 711 273 A1**
(43) Date of publication of application: **18.03.2026**
(21) Application number: 24200119.6
(22) Date of filing: 12.09.2024
(51) Int. Cl.: B64D 11/06

(54) **SPACE SAVING OVERWING SEAT**

(71) Applicant: B/E Aerospace, Inc., Winston Salem, NC 27105 (US)
(72) Inventor: DE CASTRO, Curt Kalvin Panopio, Bauan (PH); SERQUINA, Elyza Jane Ariola, Carmona (PH); REYES, Jose Renzo Bombeta, Quezon City (PH); PILLAZAR, Amiel Roy, Batangas (PH); JUSI, Angelica Macalintal, Mabini (PH)
(74) Representative: Dehns

(57) **Abstract**

A passenger seat (102) for an aircraft, comprising a seat frame (104), a seatback (106), a seat cushion (108) pivotally connected to the seatback or seat frame, a support leg (110) pivotally connected to the seat cushion and configured, in a first position, to contact the cabin floor and support the seat cushion in a substantially horizontal orientation and an actuation mechanism (214) configured to cause the support leg to pivot with respect to the seat cushion, into a second position, out of contact with the cabin floor such that the support leg no longer supports the seat cushion substantially horizontally and the seat cushion pivots with respect to the seatback and/or seat frame down towards the cabin floor due to gravity.

## Description

### TECHNICAL FIELD

The present disclosure relates to systems and methods for rapidly collapsible passenger seats. The passenger seats may be employed in aircraft, particularly in aircraft emergency exit rows.

### BACKGROUND

According to a study by the U.S. National Transportation Safety Board, the most common problem with overwing emergency exits is that passengers may not be able to open them in an emergency due to seats positioned near these overwing exits serving as an obstruction and impeding the process of evacuation during emergencies. This problem has been partially addressed by increasing the distance between the seat rows either side of the emergency exits. This however inevitably leads to a reduction in the precious normally usable space in the aircraft cabin, which could be used to fit more passenger seats, for example. In order to make use of this space in normal, non-emergency flight conditions, ideas have been put forward for collapsible passenger seats in the area near the emergency exits. The general idea is that these seats may be positioned closer to the emergency exits, and in the event of emergency be collapsed so as to no longer impede or obstruct access to and opening of the emergency exits. One issue with such collapsible seats or seat rows has been the level of complexity involved in causing the seats to collapse. Of course, in an emergency event, passengers and crew may be in a state of panic and unable to operate mechanisms with any complexity. Another issue has been the way in which the seats or seat rows have been configured to collapse. Current designs only lead to a modest reduction in the space taken up by the seat. This means that there still needs to be a large gap provided between seat rows around the emergency exits, reducing the valuable usable space inside the cabin.

### SUMMARY

According to one or more embodiments of the invention, a passenger seat for an aircraft is provided, comprising a seat frame a seatback a seat cushion pivotally connected to the seatback or seat frame, a support leg pivotally connected to the seat cushion and configured, in a first position, to contact the cabin floor and support the seat cushion in a substantially horizontal orientation and an actuation mechanism configured to cause the support leg to pivot with respect to the seat cushion, into a second position, out of contact with the cabin floor such that the support leg no longer supports the seat cushion substantially horizontally and the seat cushion pivots with respect to the seatback and/or seat frame down towards the cabin floor due to gravity.

The actuation mechanism may comprise a locking mechanism configured to lock the support leg into the first position.

The actuation mechanism may comprise a torsion spring, wherein a first end of the torsion spring is connected to the seat cushion and a second end of the torsion spring is connected to the support leg and wherein the torsion spring is configured to bias the support leg into the second position.

The actuation mechanism may comprise an outer tube connected to the seat cushion and a locking shaft positioned inside, and axially slidable within, the outer tube, wherein the outer tube comprises a circumferential slot, wherein the locking shaft comprises an L-shaped slot with a circumferentially extending portion and an axially extending portion and wherein the second end of the torsion spring is positioned within the outer tube slot and the L-shaped slot of the locking shaft.

The actuation mechanism may be configured such that, when the axially extending portion of the L-shaped slot of the locking shaft is axially aligned with the slot of the outer tube, the second end of the torsion spring is circumferentially restrained with respect to the outer tube and the support leg is fixed in its first position. When the circumferentially extending portion of the L-shaped slot is axially aligned with the slot, the second end of the torsion spring may be able to move circumferentially with respect to the outer tube and the bias of the torsion spring causes the support leg to pivot into its second position.

The actuation mechanism may further comprise a button configured to cause axial sliding of the locking shaft within the outer tube when pressed, such that the locking shaft moves with respect to the outer tube from a position where the axially extending portion of the L-shaped slot is aligned with the slot to a position where the circumferentially extending portion of the L-shaped slot is aligned with the slot.

The actuation mechanism may further comprise a biasing means configured to bias the locking shaft into its relative axial position with the outer tube where the axially extending portion of the L-shaped slot is aligned with the slot of the outer tube.

The actuation mechanism may further comprise a removable button cover configured to prevent pushing of the button when in place on the button.

According to another embodiment of the invention, a seat row for an aircraft is provided, comprising a passenger seat according to any preceding claim, one or more secondary passenger seats arranged in a row with the passenger seat, each secondary passenger seat also including a seat frame, a seatback and a seat cushion pivotally connected to the seatback or seat frame, wherein the passenger seat and each of the one or more secondary passenger seats are configured to collapse simultaneously upon actuation of the actuation mechanism.

The seat row may further comprise one or more secondary support legs pivotally connected to a seat cushion of the one or more secondary passenger seats.

Each of the one or more secondary support legs may be connected to the support leg of the passenger seat such that pivoting of the support leg from the first position to the second position causes a corresponding motion in each of the one or more secondary support legs.

Each secondary support leg may be provided with a torsion spring connected at one end to the secondary support leg and at the other end to the seat cushion with which it is pivotally connected.

The outer tube may extend at least between every torsion spring provided on the passenger seat and one or more secondary passenger seats and comprise a slot at each torsion spring, each slot axially constraining and circumferentially guiding its respective torsion spring in the same range of motion, wherein the locking shaft also extends at least between each torsion spring and comprises an L-shaped slot constraining each torsion spring in the same manner.

Actuation of the actuation mechanism may cause the locking shaft to move axially with respect to the outer tube from a position where the axially extending portion of each L-shaped slot is aligned with the slot of the outer tube, to a position where the circumferentially extending portion of the L-shaped slot is aligned with the slot, thereby allowing each torsion spring to move its respective support leg or secondary support leg into the second position.

A method of operating the passenger seat as described above is also provided, comprising the step of actuating the actuation mechanism, causing the support leg to pivot with respect to the seat cushion, from the first position into the second position, out of contact with the cabin floor such that the support leg no longer supports the seat cushion substantially horizontally and the seat cushion pivots with respect to the seatback and/or seat frame down towards the cabin floor due to gravity.

### BRIEF DESCRIPTION OF THE DRAWINGS

The figures show selected embodiments of the method and system described herein. It will however be appreciated that the disclosure is not limited to any of the embodiments illustrated in the figures and that the scope of protection is defined by the claims.
Figure 1A illustrates a seat row according to an exemplary embodiment of the present invention, said seats of the seat row being in a first position.
Figure 1B illustrates a seat according to an exemplary embodiment of the present invention, the seat being in a first position.
Figure 1C illustrates a possible arrangement of a plurality of seat rows within in aircraft.
Figure 2A illustrates a seat row and locking mechanism in accordance with an exemplary embodiment of the present invention.
Figure 2B illustrates a close up of an example of the locking mechanism in a locked state.
Figure 2C illustrates a close up of an example of the locking mechanism in an unlocked state.
Figure 2D illustrates a seat row according to an exemplary embodiment of the present invention, with a button provided for actuation of the locking mechanism.
Figure 3A illustrates a seat row according to an exemplary embodiment of the present invention, said seats of the seat row being in a second position.
Figure 3B illustrates a seat according to an exemplary embodiment of the present invention, the seat being in a second position.

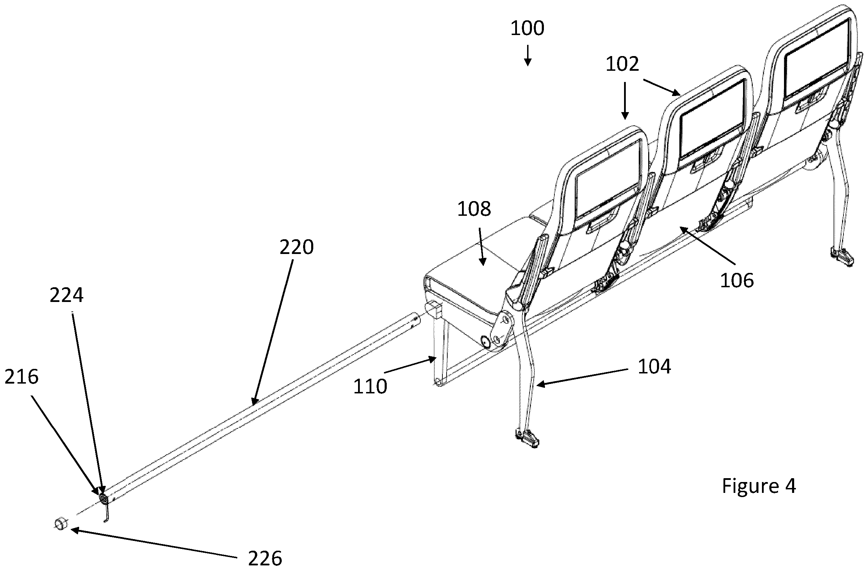

Figure 4 illustrates a seat row according to an exemplary embodiment of the present invention, with a locking mechanism installed across the seat row.

### DETAILED DESCRIPTION

Various embodiments of passenger seats and seat rows are described in detail below. The features of each embodiment can be combined and/or substituted with features of any other embodiment, unless explicitly disclosed otherwise.

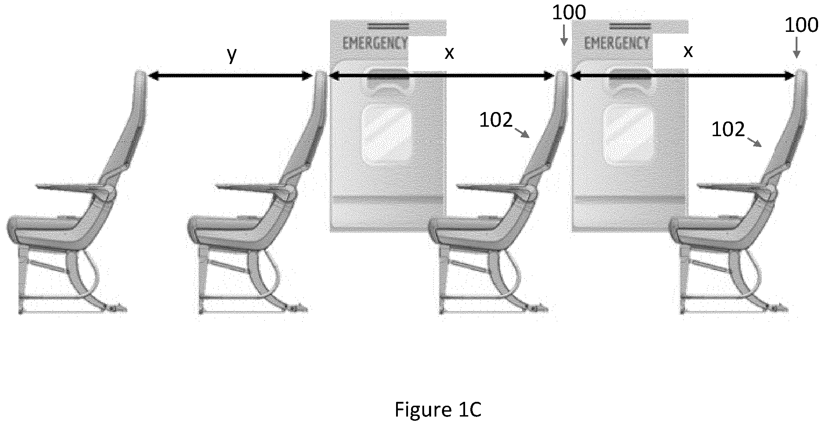

As discussed in the Background section, although collapsible passenger seats have been conceived as a means to save space in an aircraft cabin, the seats suffer from a number of problems, in particular relating to the space-saving efficiency of their design and the complexity of their collapsing mechanisms. Cabins of modern commercial airplanes are designed to provide as much space efficiency as possible, as the amount of usable space inside the cabin is directly related to the number of passengers it can hold and/or the level of comfort provided to passengers. The design of the interior of the aircraft cabin, for example in the arrangement of passengers seats, is particularly important for both of these factors. Providing increased comfort and/or increasing the number of passengers is of course greatly beneficial to airlines. Figure 1C illustrates seat rows 100 around emergency exits on an aircraft. As can be seen, the dimension x, being the distance between seat rows on either side of an emergency exit, must typically be greater than distance y, the distance between seat rows 100 in other parts of the aircraft cabin.

Another important consideration in air travel is safety. Commercial aircraft are typically provided with emergency exits over the wings of the aircraft. Doors are provided in the cabin which, once opened, allow access for passengers from the cabin out of the aircraft. As it is important that these doors are easily accessible during an emergency situation, aircraft typically space the passenger seat rows on either side of the doors with greater spacing than between the passenger rows elsewhere in the aircraft cabin. This ensures that passengers or crew can operate the doors without being obstructed or impeded by nearby passenger seats, as well as providing a wider path from the aisle to the door, avoiding tripping or congestion.

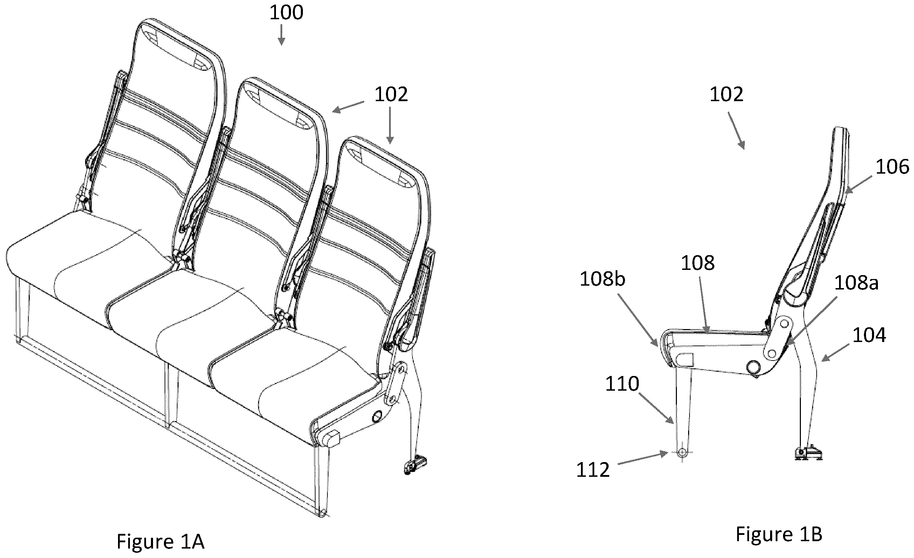

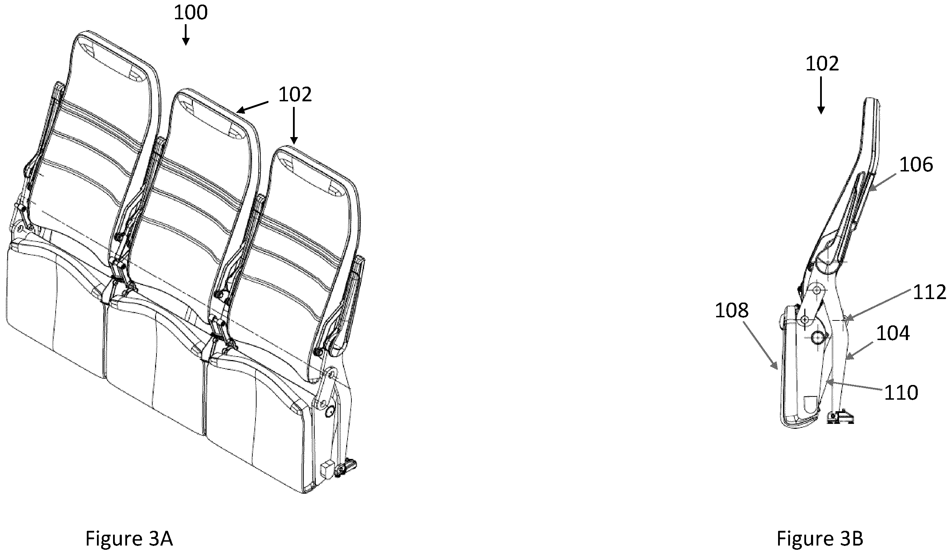

Figure 1A is a perspective view of an example passenger seat row 100 according to one embodiment the present invention with three adjacently arranged seats 102. This is illustrative and the present invention is not limited to this number of seats 102 in a seat row 100. Figure 1B illustrates a side view of an example of a passenger seat 102 according to the present invention. The seat 102 may be part of a seat row 100 or be an individual seat. The seat 102 comprises a seat frame 104, which may be configured to anchor it to the cabin floor (not shown). Connected to the seat frame 104 is a seatback 106 configured to support the back of a passenger. A seat cushion 108 is provided to support the weight of the passenger. The seat cushion 108 has a first end 108a proximate the seat frame 104 and a second end 108b distal to the seat frame 104. The seat cushion 108 is pivotally connected to the seat frame 104 or the seatback 106 at its first end 108a. In either case, the seat cushion 108 is configured to pivot with respect to the seat frame 104. With brief reference to Figure 3B, the seat cushion 108 is configured to pivot with respect to the seat frame 104 such that the second end 108b of the seat cushion 108 moves towards the cabin floor when allowed to pivot.

The seat 102 is further provided with a support leg 110. The support leg 110 is connected to the underside of the seat cushion 108 and is pivotally connected to the seat cushion 108. The support leg 110 is configured to contact the cabin floor and support the seat cushion 108 in a generally horizontal orientation, or generally parallel to the cabin floor. This is illustrated in Figure 1B and is the normal non-emergency, cruise configuration of the aircraft seat 102, where a passenger may sit safely and comfortably on the seat cushion 108 in normal flight or taxiing conditions. The support leg 110 may be provided with a support foot 112 to help stabilise the support leg 110 with respect to the cabin floor. The support foot 112 may comprise a flattened surface of the support leg 110 configured to be parallel to, and abut, the cabin floor when in the configuration shown in Figure 1B.

The support leg 110 may be connected pivotally to the underside of the seat cushion 108 at or proximal to the second end 108b of the seat cushion 108. The support leg 110 is configured to be pivotable from a position shown in Figure 1B, where the leg is in contact with the cabin floor, to a position in which the support foot 112 is brought towards, or into contact with, the seat frame 104. When this happens, again with reference to Figure 3B, as the seat cushion 108 is freely pivotable with respect to the seat frame 104 or seatback 106, and as the support leg 110 no longer contacts the cabin floor, providing support for the seat cushion 108 with respect to the cabin floor, the seat cushion 108 falls due to gravity into the position shown in Figure 3B, i.e. the second end 108b of the seat cushion 108 moves towards the cabin floor and may contact the cabin floor. In this configuration, the seat cushion 108 may be substantially vertical, thereby minimising its horizontal extension and maximising the space between the seat 102 and the seat (not shown) positioned in front of the seat 102. Said space, since the seat 102 is configured to be beside an emergency exit door, is the space in front of the door.

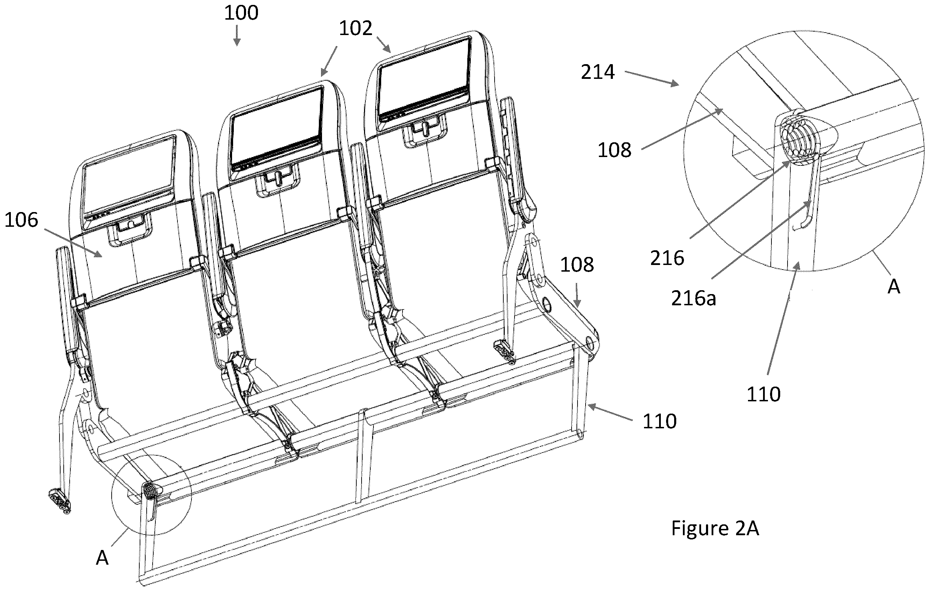

Whilst the general mechanical functioning of the collapsible seat 102 has been described, in order to facilitate said functioning, an actuation mechanism 214 may be provided. One possibility for such an actuation mechanism 214 utilises a torsion spring 216. In such an embodiment, the torsion spring 216 is attached both to the seat cushion 108 and to the support leg 110. Such a mechanism 214 is illustrated in the blown up portion "A" in Figure 2A. Although the mechanism 214 is shown here as part of a seat row 100, the mechanism 214 may be part of a single seat 102. The torsion spring 216 is configured and attached to the seat cushion 108 and support leg 110 in such a way as to bias the support leg 110 to the position shown in Figure 3B. This may be realised by a first end of the torsion spring 216 being connected to the seat cushion 108 and a second end, in the form of a spring arm 216a being connected to the support leg 110. In the position shown in Figures 1A to 2A, the support leg 110 has been extended against the bias of the torsion spring 216 such that rotational potential energy is stored in the spring 216.

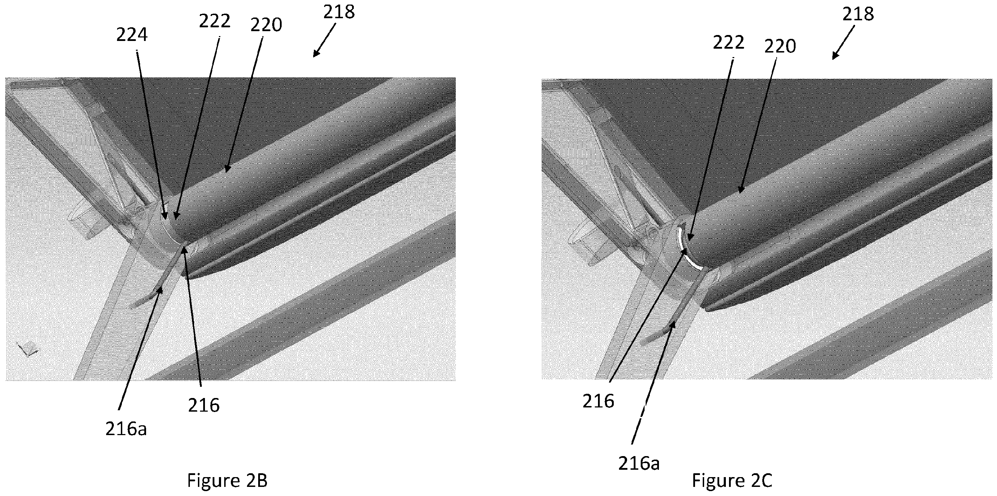

In order to maintain the torsion spring 216 in its stored-energy state, i.e. to prevent it from pulling the support leg 110 towards the position shown in Figure 3B, a locking mechanism may be provided. The locking mechanism 218 is configured to lock the support leg 110 in the position shown in Figure 1B and may take any form known to the skilled person. One example of a locking mechanism 218 is illustrated in Figures 2B and 2C. In this example, an outer tube 220 is provided attached to the underside of the seat cushion 108. The outer tube 220 is fixed axially and rotationally to the underside of the seat cushion 108. The outer tube 220 is provided, at a location proximate the support leg 110 and the thereto-attached torsion spring 216, with a slot 222, through which the spring arm 216a of the torsion spring 216 passes. The slot 222 is configured to axially constrain the spring arm 216a and guide it circumferentially from a position in which the support leg 110 is in the position shown in Figure 1B to the position shown in Figure 3B.

Provided within the outer tube 220 is a locking shaft 224. The locking shaft 224 may take the form of an at least partially hollow tube with an L-shaped slot disposed therein. The locking shaft 224 is configured to slide axially within the outer tube 220 but is constrained in the circumferential direction. In other words, the locking shaft 224 may not rotate within the outer tube 220. The L-shaped slot of the locking shaft 224 is shaped with a circumferentially extending portion and an axially extending portion. The circumferentially extending portion is configured in the same way as the slot on the outer tube 220, i.e. to axially constrain the spring arm 216a and guide it circumferentially from a position in which the support leg 110 is in the position shown in Figure 1B to the position shown in Figure 3B. The axially extending portion is configured to constrain the spring arm 216a circumferentially, in the position shown in Figure 1B. The locking shaft 224 is configured such that it is axially slidable within the outer tube 220 such that both portions of its L-shaped slot can be axially aligned with the slot in the outer tube 220. This means that, due to the circumferential constraint between the locking shaft 224 and the outer tube 220 and the circumferential constraint of the spring arm 216a in the axially extending portion of the L-shaped slot of the locking shaft 224, when the locking shaft 224 is in a relative axial position with respect to the outer tube 220 such that only the axially extending portion of the locking shaft 224 is aligned axially with the slot 222 in the outer tube 220, the support leg 110, connected to the spring arm 216a, is locked into the position shown in Figure 1B. This is illustrated in Figure 2B. This is the deployed position of the seat 102, where the seat 102 is usable by a passenger for seating during normal flight conditions or taxiing.

Figure 2C, on the other hand, illustrates a relative axial position between the locking shaft 224 and the outer tube 220 wherein the circumferentially extending portion of the L-shaped slot of the locking shaft 224 is aligned with the slot 222 in the outer tube 220. In this position, the spring arm 216a, and thus the support leg 110, is no longer constrained circumferentially by the locking shaft 224. Rather, the spring arm 216a is free to move along both the circumferentially extending portion of the L-shaped slot of the locking shaft 224 and the therewith-aligned slot 222 in the outer tube 220. In this position, the bias and stored energy of the torsion spring 216 drives movement of the support leg 110 from the position shown in Figure 1B to that shown in Figure 3B. It can therefore be appreciated that the sliding of the locking shaft 224 from the position shown in Figure 2B to that shown in Figure 2C acts as an actuation mechanism for collapsing the passenger seat 102 from the position shown in Figure 1B to that in Figure 3B.

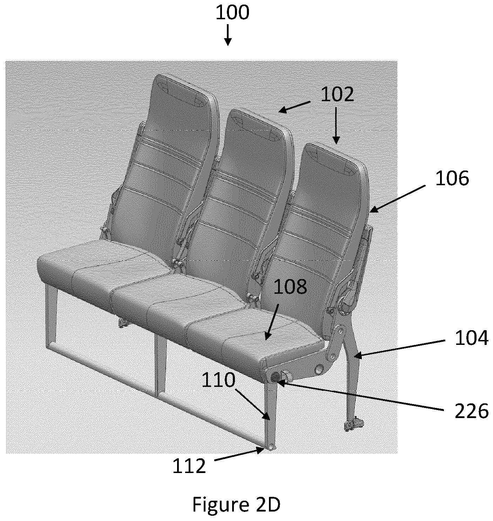

In order to provide a user with an easy way to slide the locking shaft 224 in this way, a button 226, as shown in Figure 2D, may be provided on the side of the seat cushion 108, axially aligned with the outer tube 220 and locking shaft 224. The button 226 may be simply axially connected to the locking shaft 224 such that pushing the button 226 also pushes the locking shaft 224 from the position shown in Figure 2B to that shown in Figure 2C. As can be appreciated, this provides an extremely simple means to collapse the seat 102. In an emergency event, the simpler such collapsing may be achieved, the quicker and more certain a passenger may exact such collapsing to safely access the emergency door. The button 226 may be provided with a button cover 228, which prevents pushing of the button 226 when covering the button 226. The locking shaft 224 may also be axially biased towards its position shown in Figure 2B. This may be achieved by a spring or similar biasing means between the end of the locking shaft 224 opposite the button 226 and an axial surface affixed to the seat cushion 108 or outer tube 220. The spring may abut an axial inner surface of the outer tube 220 at the end of the outer tube 220 opposite the button 226. This biasing means that when the support leg 108 is pulled from the position shown in Figure 3B to that shown in Figure 1B, the locking shaft 224 automatically slides into the position shown in Figure 2B when the support leg 110 and spring arm 216a are in a full deployed position, thereby locking the support leg 110 in this position. The biasing also protects against unwanted actuation of the collapsing mechanism due to vibrations in the aircraft, for example.

Although the actuation mechanism 214 has been described above as a torsion spring 216 and locking mechanism 218 apparatus, the actuation mechanism 214 is not limited thereto. For example, the actuation mechanism 214 could comprise an electric motor capable of rotating the support leg 110 from the position shown in Figure 1B to that shown in Figure 3B. The motor could cause said rotation upon pressing of the button 226, which either powers a circuit of the actuation mechanism 214 or causes a controller to send a command to the motor to exact the rotation.

Although the invention has so far been discussed in respect of a single seat 102, the rapid support leg collapsing mechanism can also be applied to seat rows, such as the seat rows 100 illustrated in Figures 1A and 3B. These illustrations are however examples only and the seat rows 100 may vary in structure and configuration as will be described below.

Generally, a seat row 100 comprises at least one actuation mechanism 214 as previously described. Equally, the seat row 100 comprises at least one support leg 110. Two or more neighbouring seat cushions 108 in a seat row 100 may be connected to one another such that a single support leg 110 may support two or more neighbouring seat cushions 108 in a row in a generally horizontal orientation with respect to the cabin floor. For stability reasons, however, it may be preferable to include two or more support legs 110 for the seat row 100. For example, the seat cushion 108 of each seat 102 may be provided with its own support leg 110, or one support leg 110 may be provided at each end of the seat row 100, i.e. on the end seats 102.

If more than one support leg 110 is provided on the seat row 100 and only one actuation mechanism 214 is provided, in order to provide functionality to collapse all seats 102 in the seat row 100 simultaneously, each of the support legs 110 may be connected to one another. Figures 1A and 2A show an example where three support legs 110 are provided on a seat row 100 of three seats 102. In this example, each support leg 110 is connected to another by a horizontal bar. Due to the connection, when the support leg 110 connected to the actuation mechanism 214, for example to the spring arm 216a of the torsion spring mechanism, rotates with respect to the seat cushion 108, it drives the other support legs 110 of the seat row 100 in the same rotation with respect to their respective seat cushions 108, thereby collapsing the entire seat row.

In other embodiments, where the seat row 100 is provided with two or more support legs 110, two or more of these support legs may be provided with a dedicated actuation mechanism 214. Said actuation mechanisms 214 may however nonetheless be actuatable via a single user input, e.g. pressing of the button 226. One way in which this may be embodied is to provide each of the two or more support legs 110 with a dedicated torsion spring 216, wherein a first end of each torsion spring 216 is connected to a seat cushion 108 and a second end of each torsion spring 216 is connected to the respective support leg 110. One benefit of providing a plurality of support legs 110 to a seat row 100 each having a dedicated torsion spring 216 is that the overall biasing force of the support legs 110 into the position shown in Figure 3B is increased, increasing reliability of the collapsing function as a whole.

When more than one torsion spring 216 is provided, each torsion spring 216 may also be associated with a locking mechanism 218 as described in relation to Figures 2B and 2C. One way in which this may be embodied may be to provide an outer tube 220 as previously described, which extends across the undersides of the seat cushions 108 at least between each torsion spring 216. Each torsion spring 216 is axially contained within a slot 222 in the outer tube 220. Similarly a locking shaft 224 may be provided within said outer tube 220. An L-shaped slot in the locking shaft 224 is also provided at each torsion spring 216 and the interaction between the torsion spring arms 216a and the slots in the outer tube 220 and the locking shaft 224 is the same at every torsion spring 216 as described earlier in relation to Figures 2B and 2C. This means that when the locking shaft 224 slides axially within the outer tube 220, every torsion spring 216 and support leg 110 in the seat row 100 is either locked in the deployed state or released for collapsing of the seats 102 simultaneously. A benefit of providing a common outer tube 220 and locking shaft 224 for each torsion spring 216 and support leg 110 of the seat row 100 is that a single button 226 may be used to actuate the rotation of each support leg 110 simultaneously. Additionally, providing a locking mechanism 218 for each torsion spring 216 and support leg 110 increases the overall stability of the seats 102 and seat row 100 during the deployed in-flight configuration.

The invention as described above overcomes multiple problems with present emergency row aircraft seats. In particular, the mode of collapsing seats 102 in the seat rows 100, wherein the support leg(s) 110 retract towards the seat cushion(s) 108 and the seat cushion(s) 108 fall towards the floor, rather than upwards towards the seatback 106, creates much more space in front of the seat frame 104 as compared with known collapsible passenger seats. It is envisaged that this space efficiency could lead, with reference again to Figure 1C, to an aircraft cabin seat row configuration where x=y, and no cabin space is lost due to having to provide more space around emergency exits during an emergency situation. Of course, the actuation mechanism 216, involving the simple pressing of a button to collapse all seats 102 on a seat row 100, also greatly improves the simplicity of the collapsing mechanism, and therefore the safety of the aircraft and passengers.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A passenger seat (102) for an aircraft, comprising:
a seat frame (104);
a seatback (106);
a seat cushion (108) pivotally connected to the seatback or seat frame;
a support leg (110) pivotally connected to the seat cushion and configured, in a first position, to contact the cabin floor and support the seat cushion in a substantially horizontal orientation;
an actuation mechanism (214) configured to cause the support leg to pivot with respect to the seat cushion, into a second position, out of contact with the cabin floor such that the support leg no longer supports the seat cushion substantially horizontally and the seat cushion pivots with respect to the seatback and/or seat frame down towards the cabin floor due to gravity.

2. The passenger seat of claim 1, wherein the actuation mechanism (214) comprises a locking mechanism (218) configured to lock the support leg (110) into the first position.

3. The passenger seat of claim 1 or 2, wherein the actuation mechanism (214) comprises a torsion spring (216), wherein a first end of the torsion spring (216) is connected to the seat cushion (108) and a second end (216a) of the torsion spring is connected to the support leg (110) and wherein the torsion spring is configured to bias the support leg into the second position.

4. The passenger seat of any preceding claim, wherein the actuation mechanism (214) comprises an outer tube (220) connected to the seat cushion (108) and a locking shaft (224) positioned inside, and axially slidable within, the outer tube (220); wherein the outer tube (220) comprises a circumferential slot (222); wherein the locking shaft comprises an L-shaped slot with a circumferentially extending portion and an axially extending portion; wherein the second end of the torsion spring (216) is positioned within the outer tube slot (222) and the L-shaped slot of the locking shaft (224).

5. The passenger seat of claim 4, wherein the actuation mechanism (214) is configured such that, when the axially extending portion of the L-shaped slot of the locking shaft (224) is axially aligned with the slot (222) of the outer tube (220), the second end of the torsion spring (216) is circumferentially restrained with respect to the outer tube (220) and the support leg (110) is fixed in its first position; and wherein, when the circumferentially extending portion of the L-shaped slot is axially aligned with the slot (222), the second end of the torsion spring can move circumferentially with respect to the outer tube and the bias of the torsion spring causes the support leg to pivot into its second position.

6. The passenger seat of claim 5, the actuation mechanism (214) further comprising a button (226) configured to cause axial sliding of the locking shaft (224) within the outer tube (220) when pressed, such that the locking shaft (224) moves with respect to the outer tube (220) from a position where the axially extending portion of the L-shaped slot is aligned with the slot (222) to a position where the circumferentially extending portion of the L-shaped slot is aligned with the slot (222).

7. The passenger seat of claim 6, wherein the actuation mechanism (214) further comprises a biasing means configured to bias the locking shaft (224) into its relative axial position with the outer tube (220) where the axially extending portion of the L-shaped slot is aligned with the slot (222) of the outer tube (220).

8. The passenger seat of claim 6 or 7, wherein the actuation mechanism (214) further comprises a removable button cover configured to prevent pushing of the button (226) when in place on the button (226).

9. A seat row (100) for an aircraft, comprising:
a passenger seat (102) according to any preceding claim;
one or more secondary passenger seats arranged in a row with the passenger seat (102), each secondary passenger seat also including a seat frame, a seatback and a seat cushion pivotally connected to the seatback or seat frame;
wherein the passenger seat (102) and each of the one or more secondary passenger seats are configured to collapse simultaneously upon actuation of the actuation mechanism.

10. The seat row of claim 9, further comprising one or more secondary support legs pivotally connected to a seat cushion of the one or more secondary passenger seats.

11. The seat row of claim 10, wherein each of the one or more secondary support legs is connected to the support leg (110) of the passenger seat (102) such that pivoting of the support leg (110) from the first position to the second position causes a corresponding motion in each of the one or more secondary support legs.

12. The seat row of claim 10 or 11, wherein each secondary support leg is provided with a torsion spring (216) connected at one end to the secondary support leg and at the other end to the seat cushion with which it is pivotally connected.

13. The seat row of claim 12, wherein the outer tube (220) extends at least between every torsion spring (216) provided on the passenger seat (102) and one or more secondary passenger seats and comprises a slot (222) at each torsion spring, each slot (222) axially constraining and circumferentially guiding its respective torsion spring in the same range of motion; wherein the locking shaft (224) also extends at least between each torsion spring and comprises an L-shaped slot constraining each torsion spring in the same manner.

14. The seat row of claim 13, wherein actuation of the actuation mechanism (214) causes the locking shaft (224) to move axially with respect to the outer tube (220) from a position where the axially extending portion of each L-shaped slot is aligned with the slot (222) of the outer tube, to a position where the circumferentially extending portion of the L-shaped slot is aligned with the slot (222), thereby allowing each torsion spring (216) to move its respective support leg or secondary support leg into the second position.

15. A method of operating the passenger seat of any of claims 1 to 8, comprising:
actuating the actuation mechanism, causing the support leg to pivot with respect to the seat cushion, from the first position into the second position, out of contact with the cabin floor such that the support leg no longer supports the seat cushion substantially horizontally and the seat cushion pivots with respect to the seatback and/or seat frame down towards the cabin floor due to gravity.
